(19) Europäisches Patentamt
European Patent Office
Office européen des brevets

(11) **EP 2 319 607 B1**

(12) **FASCICULE DE BREVET EUROPEEN**

(45) Date de publication et mention de la délivrance du brevet:
**16.01.2013 Bulletin 2013/03**

(51) Int Cl.:
***B01D 53/30*** *(2006.01)*   ***B01D 53/50*** *(2006.01)*
***F23J 15/04*** *(2006.01)*

(21) Numéro de dépôt: **10188199.3**

(22) Date de dépôt: **20.10.2010**

(54) **Procédé et installation de commande d'un laveur humide**

Verfahren und Vorrichtung zur Steuerung eines Nasswäschers

Process and device to control a wet washer

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2009 FR 0957384**

(43) Date de publication de la demande:
**11.05.2011 Bulletin 2011/19**

(73) Titulaire: **LAB SA**
**69006 Lyon (FR)**

(72) Inventeurs:
• **Siret, Bernard**
  **69200, VENISSIEUX (FR)**

• **Tabaries, Franck**
  **83190, OLLIOULES (FR)**

(74) Mandataire: **Grand, Guillaume et al**
**Cabinet Lavoix**
**62, rue de Bonnel**
**68448 Lyon Cedex 03 (FR)**

(56) Documents cités:
WO-A1-2006/026060    JP-A- 10 085 549
JP-A- 11 244 648     US-A- 4 164 547
US-A- 5 635 149      US-A- 5 686 053

**Description**

La présente invention concerne un procédé de commande d'un laveur humide, ainsi qu'une installation permettant la mise en oeuvre de ce procédé.

Les laveurs humides constituent une classe importante des équipements d'épuration des fumées et trouvent des applications régulières dans le domaine de la production d'énergie ou de l'incinération.

Dans ces procédés, quand on enlève le dioxyde de soufre $SO_2$ des fumées, celui-ci est absorbé par un ou plusieurs laveurs et, du fait de l'oxydation, naturelle ou forcée, ce dioxyde de soufre se retrouve sous la forme de sulfates dans les laveurs.

Pour que l'absorption du $SO_2$ soit efficace, il est nécessaire qu'un composé, neutralisant l'acidité, soit introduit dans les laveurs. Ce composé peut être de la soude, de la chaux, ou pour les plus grosses installations, du calcaire. C'est le cas, en particulier, pour les centrales de production d'énergie.

Dans le cas des usines d'incinération, où le polluant acide majoritaire est l'acide chlorhydrique, on utilise, en général, un laveur acide et un laveur alcalin (pour le $SO_2$). Pour des raisons économiques, il peut être intéressant d'utiliser des réactifs neutralisants différents dans les deux laveurs, par exemple de la chaux au premier laveur, et de la soude caustique au second. Dans ce cas, les purges du second laveur sont souvent introduites dans le premier laveur.

Dans tous les cas de figure, il y a production de sulfate de calcium di-hydraté (gypse) et il faut éviter une précipitation anarchique et incontrôlée de ce gypse. En effet, une précipitation incontrôlée de gypse peut se traduire par :

- des problèmes de dépôt encroûtant, qui vient boucher les canalisations,
- une mauvaise qualité de gypse, qui ne permettra pas sa réutilisation,
- une captation de $SO_2$ instable et peu fiable.

Une situation stable peut devenir instable pour plusieurs raisons. Par exemple, si les laveurs reçoivent un flux important et continu de dioxyde de soufre, qui disparaît ou diminue rapidement, on peut, de par les purges, perdre la quasi-totalité des cristaux et ne plus avoir assez de germes de nucléation pour assurer une précipitation contrôlée, qui devient alors anarchique. Ce cas est assez fréquent en incinération, quand la qualité des produits incinérés peut varier rapidement. Une variation rapide de pH, due par exemple à un défaut de la mesure, peut faire apparaître des conditions où le gypse ne précipite plus. Une apparition de mousse peut aussi se traduire par des pertes de noyaux de cristallisation, ou par leur neutralisation.

On peut aussi, dans d'autres périodes transitoires, comme les arrêts ou les démarrages, se trouver dans des conditions où apparaît un manque de cristaux de gypse ou de noyaux propres à assurer une cristallisation maîtrisée.

Dans toutes ces situations, un simple recyclage des noyaux, par exemple à l'aide d'un hydro-cyclone comme le propose U5 5,635,149, ne suffit pas.

De son côté, WO-A-2006/026060, qui peut être considéré comme l'art antérieur le plus proche de l'objet de la revendication 1 annexée, propose de commander une colonne de lavage, en pied de laquelle est présente une solution contenant du gypse. La commande de cette colonne de lavage repose sur un prélèvement liquide en pied de colonne, en vue de séparer l'eau du gypse, sur une mesure de pH du prélèvement précité, et sur une mesure de la quantité de dioxyde de souffre dans des fumées à traiter.

La présente invention vise à proposer un procédé qui est susceptible de prévenir les situations instables évoquées plus haut, et d'assurer en permanence des conditions de nucléation et cristallisation contrôlées, et qui est en outre propre à assurer une cristallisation maîtrisée du gypse dans les laveurs humides.

A cet effet, elle a pour objet un procédé de commande d'un laveur humide, tel que défini à la revendication 1 annexée.

D'autres caractéristiques sont spécifiées aux revendications dépendantes 2 à 8.

L'invention a également pour objet une installation pour la mise en oeuvre du procédé ci-dessus, telle que définie à la revendication 9.

L'invention va être décrite ci-après, en référence à la figure unique, laquelle est une vue schématique illustrant une installation de commande d'un laveur humide conforme à l'invention.

L'invention propose un procédé de commande d'un laveur humide destiné à maximiser et à sécuriser la captation des SOx, tout en minimisant les risques de précipitation incontrôlée, et en maintenant de manière fiable le pH dans une zone optimale. En référence à la figure unique, on retrouve un laveur humide de type classique, désigné dans son ensemble par la référence 201. De façon habituelle, ce laveur reçoit des fumées à épurer, véhiculées par la ligne 1, lesquelles sont mises en présence d'un liquide contenant un réactif de neutralisation, véhiculé par la ligne 9.

Selon une première caractéristique de l'invention, on asservit la purge du laveur au flux entrant de dioxyde de soufre $SO_2$. Sur la figure, cette purge est matérialisée par la ligne 3.

Selon l'invention, on impose un débit de purge 3 calculé selon une fonction préétablie et croissante du flux de $SO_2$. Pour clarifier davantage cette disposition, on asservit un débit de purge du laveur, par exemple exprimé en mètres cube par heure, à un flux de dioxyde de soufre, par exemple exprimé en kilogrammes par heure. On peut ainsi utiliser une fonction linéaire :

$$Q_1 = k (Q_2)$$

où $Q_1$ est le débit de purge, k est une constante positive prédéterminée et $Q_2$ est le flux de $SO_2$ pénétrant dans le laveur. Ce flux de $SO_2$ est déterminé, par exemple, à partir d'une mesure de la concentration de $SO_2$ présent dans les fumées en amont du laveur. Cette mesure peut être mise en oeuvre par un analyseur 101 de tout type approprié. Le flux est alors obtenu en multipliant cette mesure de concentration par le débit global de fumées 1.

Une précipitation anarchique et non contrôlée de gypse peut se faire n'importe où, y compris sur les électrodes de pH, ce qui empêche leur bon fonctionnement. Or, un contrôle de pH précis est nécessaire, tant pour assurer la captation de certains polluants, comme le mercure, que pour prévenir des situations comme un pH beaucoup trop bas, qui empêche une bonne cristallisation du gypse et aggrave les problèmes liés aux fluorures comme la corrosion. Il est donc critique de disposer d'une mesure de pH fiable.

Aussi, selon une seconde caractéristique de l'invention, on mesure le pH des liquides du laveur considéré après dilution de ce liquide par de l'eau, débarrassée des matières en suspension comme le gypse par un hydro-cyclone, ou des multi cyclones. Cette disposition peut être comprise en se référant à la figure unique.

Un flux 4 des liquides dans le laveur 201 est extrait, de préférence à l'aval des pompes de recirculation du laveur, et alimente un hydro-cyclone ou une batterie d'hydro-cyclones 301. La sous verse 5 de cet hydro-cyclone ou de cette batterie d'hydro-cyclones est évacuée, de manière préférée retournée au laveur 201. De plus, la surverse 6 est éventuellement divisée en un flux 6' évacué, et un flux 6" utilisé pour la dilution.

Dans la variante préférée, la totalité du flux de surverse de l'hydro-cyclone est utilisée pour la dilution, et le flux 6' est nul. Ce flux 6" est mélangé à de l'eau 7, avant mesure par un pH-mètre 401, qui sert à piloter l'adjonction du réactif neutralisant 9. Le flux résultant 8 est évacué, ou bien retourné au laveur 201.

De manière préférée le rapport de dilution entre, d'une part, le flux d'eau fraîche de dilution apportée par 7 et, d'autre part, le flux de la fraction 6" des liquides du laveur, est compris entre 0.5 : 1 et 20 : 1, de préférence entre 2 : 1 et 10 : 1. De tels rapports de dilution mettent l'électrode de pH à l'abri de problèmes liés à la température, et à la saturation du gypse, et limitent fortement l'attaque de l'électrode par le fluor. Cette mesure de pH, fiabilisée, sert à piloter l'appoint de réactif neutralisant 9 au laveur.

De façon typique, on choisit une valeur de pH seuil, par exemple comprise entre 0.5 et 7.5. Dans le cas de l'incinération, cette valeur est avantageusement comprise entre 1.0 et 3.5, notamment voisine de 2. Puis, on va faire varier la quantité de réactif de neutralisation admise dans le laveur, afin que la valeur de pH, telle que mesurée ci-dessus, se rapproche de cette valeur seuil.

D'autre part, la présence de mousses en quantité importante est très préjudiciable au bon fonctionnement du laveur et peut empêcher de maintenir une qualité et une quantité de gypse ou de noyau de gypse satisfaisantes. Les agents, qui provoquent ces phénomènes de moussage, sont des agents organiques dont on peut détecter la présence. Aussi, selon une autre caractéristique de l'invention, on déclenche l'injection d'un produit surfactant anti-mousse, par la ligne 10, si la concentration en composés organiques totaux COT ou bien la concentration en composés organiques volatils COV excède un seuil préétabli.

A titre d'exemple non limitatif, la valeur de ce seuil est par exemple comprise entre 50 et 200 mg/$Nm_3$. Le produit surfactant, à action anti-mousse, peut être de tout type approprié. On citera par exemple à titre non limitatif, les huiles silicones, les mélanges d'émulsifiants non ioniques, de savon et d'hydrocarbures, ainsi que les mélanges d'acide gras et d'alcools supérieurs avec des hydrocarbures.

La quantité d'agent injecté dépend bien entendu de son efficacité. A titre d'exemple non limitatif, on peut citer une quantité comprise entre 10 et 200 ml d'agent anti-mousse injecté, par mètre cube de purge. Selon l'invention, un analyseur 102, situé sur le chemin des fumées en amont du laveur, pilote cette injection. En d'autres termes, lorsque l'analyseur détecte que la teneur en composés organiques est supérieure au seuil préétabli, il commande l'injection de produits surfactants, par la ligne 10.

Enfin, il est possible que la concentration en gypse dans le laveur soit nulle, en particulier lors du démarrage de ce laveur. Aussi, entre autres pour ces cas, selon une dernière disposition de l'invention, on injecte par la ligne 11 dans le laveur, un lait de gypse ou bien du gypse, de façon à assurer un ensemencement. Il s'agit donc d'éviter la nucléation homogène, peu contrôlable et susceptible de se produire d'un seul coup quand on excédera une certaine sursaturation. Il s'agit également de favoriser la croissance sur des germes introduits ou conservés dans le laveur.

La phase de démarrage correspond, par exemple aux 24 premières heures, en particulier aux 12 premières heures de fonctionnement du laveur. De plus, l'injection du gypse ou du lait de gypse, lors de cette phase de démarrage, permet avantageusement d'obtenir une concentration comprise entre 2 et 20 g/l de gypse dans ce laveur.

Grâce à un contrôle strict des conditions de nucléation, du pH et des phénomènes de moussage, l'invention permet de faire fonctionner le laveur dans des conditions où, à la fois on maximise la captation des oxydes de soufre et du mercure, tout en évitant les problèmes de dépôts incontrôlés de gypse dans le laveur et ses canalisations.

Dans ce qui précède, le procédé de commande conforme à l'invention fait intervenir la combinaison de quatre opérations :

- asservissement de la purge du laveur au flux de dioxyde de soufre ;
- asservissement de la quantité de réactif neutralisant à la mesure de pH ;
- injection de produit anti-mousse, si la teneur en composés organiques dépasse un seuil préétabli ; et
- injection de gypse ou de lait de gypse.

Cependant, à titre de variante, il est à noter que chacune de ces opérations peut être mise en oeuvre indépendamment, à savoir sans que les trois autres ne soient réalisées. De plus, on peut mettre en oeuvre toute combinaison possible, faisant intervenir deux de ces opérations. Enfin, on peut également mettre en oeuvre toute combinaison possible, faisant intervenir trois de ces opérations.

**Revendications**

1.  Procédé de commande d'un laveur humide (201), dans lequel des fumées à épurer (1), contenant du dioxyde de soufre, sont mises en présence avec un liquide de lavage contenant un réactif de neutralisation (9), procédé dans lequel :

    - on détermine un flux de dioxyde de soufre entrant, à savoir en amont du laveur, et on asservit le débit de purge (3) du laveur à la valeur de ce flux de dioxyde de soufre, selon une fonction croissante de cette valeur de flux ;
    - on prélève, en aval du laveur (201), un flux de liquide (4) distinct du flux de purge (3), on introduit ce flux de liquide dans un hydro-cyclone ou une batterie d'hydro-cyclones (5), on mélange au moins une fraction (6") de la surverse (6) de cet hydro-cyclone ou de cette batterie d'hydro-cyclones avec de l'eau de dilution (7), on mesure le pH de ce mélange et on asservit, à cette mesure de pH, la quantité de réactif de neutralisation introduite dans le laveur ;
    - on mesure la teneur des fumées en composés organiques totaux ou en composés organiques volatils, en amont du laveur, et on déclenche l'injection dans ce laveur d'un produit anti-mousse (10), si cette mesure excède un seuil préétabli ;
    - au moins lors du démarrage du laveur, on injecte du lait de gypse ou du gypse (11) de façon à créer un ensemencement en noyaux de gypse.

2.  Procédé selon la revendication précédente, dans lequel on asservit le débit de purge du laveur au flux entrant de dioxyde de soufre, selon la formule :

$$Q_1 = K^*Q_2,$$

où $Q_1$ est le débit de purge du laveur, K est une constante positive et $Q_2$ est le flux de dioxyde de soufre entrant dans le laveur.

3.  Procédé selon la revendication 1 ou 2, dans lequel le rapport de flux, entre la quantité d'eau de dilution (7) et la partie (6") de surverse mélangée à cette eau, est compris entre 0.5 : 1 et 20 : 1, de préférence entre 2 : 1 et 10 : 1.

4.  Procédé selon l'une des revendications précédentes, dans lequel on choisit une valeur de pH seuil, comprise entre 0.5 et 7.5, de préférence entre 1.0 et 3.5, notamment voisine de 2, et on fait varier la quantité de réactif de neutralisation introduite dans le laveur, de sorte que le pH du mélange mesuré se rapproche de ladite valeur seuil.

5.  Procédé selon l'une des revendications précédentes, dans lequel le seuil préétabli au-delà duquel on déclenche l'injection d'un produit anti-mousse est compris entre 50 et 200 mg/Nm$^3$ de COV (composés organiques volatils) ou de COT (composés organiques totaux).

6.  Procédé selon la revendication précédente, **caractérisé en ce qu'**on injecte le produit anti-mousse, selon une quantité comprise entre 10 et 200 ml/m$^3$ de purge du laveur.

7.  Procédé selon l'une quelconque des revendications précédentes **caractérisé en ce que** la phase de démarrage du laveur correspond aux 24 premières heures, de préférence aux 12 premières heures d'utilisation du laveur.

8.  Procédé selon l'une quelconque des revendications précédentes, **caractérisé en ce qu'**on injecte le gypse ou le lait de gypse, de façon à induire une concentration de 2 à 20 g/l de gypse dans le liquide de lavage.

9.  Installation pour la mise en oeuvre du procédé selon l'une quelconque des revendications précédentes, comprenant :

    - des moyens de détermination du flux de dioxyde de soufre entrant dans le laveur ;
    - des moyens d'asservissement du débit d'une ligne de purge du laveur, propres à coopérer avec ces moyens de détermination ;
    - une ligne de prélèvement de liquide sortant du laveur, qui est distincte de la ligne de purge et qui alimente l'hydro-cyclone ou la batterie d'hydro-cyclones (5) ;

- des moyens d'ajout d'eau de dilution au niveau de la surverse (6) de l'hydro-cyclone ou de la batterie d'hydro-cyclones ;

- des moyens de mesure du pH, disposés au niveau des moyens d'ajout d'eau de dilution ;

- des moyens d'asservissement de la quantité de réactif neutralisant introduite dans le laveur, propres à coopérer avec ces moyens de mesure du pH ;

- des moyens de mesure de la teneur des fumées envoyées au laveur en composés organiques totaux ou en composés organiques volatils ;

- des moyens d'injection d'un produit anti-mousse ;

- des moyens d'asservissement des moyens d'injection, propres à coopérer avec les moyens de mesure en composés organiques totaux ou en composés organiques volatils ; et

- des moyens d'injection de gypse ou de lait de gypse dans le laveur.

## Claims

1. A method of controlling a wet scrubber (201), wherein flue gases to be cleaned (1), containing sulfur dioxide, are brought into contact with a scrubbing liquid containing a neutralising reagent (9), in which method:

    - an incoming flow of sulfur dioxide, i.e. upstream of the scrubber, is determined and the purge flow (3) of the scrubber is controlled relative to the value of this sulfur dioxide flow, according to an increasing function of this flow value;
    - downstream of the scrubber (201), a liquid flow (4) separate from the purge flow (3) is sampled, this liquid flow is introduced into a hydrocyclone or a hydrocyclone battery (5), at least a fraction (6") of the overflow (6) from this hydrocyclone or hydrocyclone battery is mixed with diluting water (7), the pH of this mixture is measured and the quantity of neutralising reagent introduced into the scrubber is controlled as a function of this pH measurement;
    - the content of total organic compounds or volatile organic compounds in the flue gases is measured upstream of the scrubber and the injection of an anti-foam product (10) into this scrubber is triggered if this measurement exceeds a preset threshold;
    - at least during start-up of the scrubber, milk of gypsum or gypsum (11) is injected so as to create seeding with gypsum nuclei.

2. A method according to the preceding claim, wherein the purge flow of the scrubber is controlled as a function of the incoming sulfur dioxide flow, according to the formula:

$$Q_1 = K * Q_2,$$

where $Q_1$ is the purge rate of the scrubber, K is a positive constant and $Q_2$ is the flow of sulfur dioxide entering the scrubber.

3. The method according to claim 1 or $_2$, wherein the flow ratio between the quantity of diluting water (7) and the fraction (6") of overflow mixed with this water is between 0.5:1 and 20:1 , preferably between 2:1 and 10:1.

4. The method according to one of the preceding claims, wherein a pH threshold value is selected between 0.5 and 7.5, preferably between 1.0 and 3.5, particularly around 2, and the quantity of neutralising reagent introduced into the scrubber is varied so that the measured pH of the mixture is close to said threshold value.

5. The method according to one of the preceding claims, wherein the predetermined threshold beyond which the injection of an anti-foam product is triggered is between 50 and 200 mg/NM$^3$ VOC (volatile organic compounds) or TOC (total organic compounds).

6. The method according to the preceding claim, **characterised in that** the anti-foam product is injected in a quantity of between 10 and 200 ml/m$^3$ of purge from the scrubber.

7. The method according to any one of the preceding claims, **characterised in that** the start-up phase of the scrubber corresponds to the first 24 hours and preferably the first 12 hours of use of the scrubber.

8. The method according to any one of the preceding claims, **characterised in that** the gypsum or milk of gypsum is injected so as to create a concentration of 2 to 20 g/l of gypsum in the scrubbing liquid.

9. An installation for carrying out the method according to any one of the preceding claims, comprising:

    - means for determining the flow of sulfur dioxide entering the scrubber;
    - means for controlling the flow of a purge line of the scrubber, suitable for cooperating with these determining means;
    - a sampling line for liquid leaving the scrubber, which is separate from the purge line and which feeds the hydrocyclone or hydrocyclone battery (5);
- means for adding diluting water at the overflow (6) of the hydrocyclone or hydrocyclone battery;
- means for measuring pH, arranged at the level of the means for adding diluting water;
- means for controlling the quantity of neutralising reagent introduced into the scrubber, suitable for cooperating with said means for measuring pH;
- means for measuring the content of total organic compounds or volatile organic compounds in the flue gases sent to the scrubber;
- means for injecting an anti-foam product;
- means for controlling injection means, suitable for cooperating with the means for measuring total organic compounds or volatile organic compounds; and
- means for injecting gypsum or milk of gypsum into the scrubber.

**Patentansprüche**

1. Verfahren zur Steuerung eines Nasswäschers (201), in dem die zu reinigenden Rauchgase (1), welche Schwefeldioxid enthalten, mit einer Waschflüssigkeit in Berührung gebracht werden, die ein Neutralisierungsreagenz (9) enthält, wobei in dem Verfahren:

    - ein eingangsseitiger Schwefeldioxidstoffstrom bestimmt wird, nämlich stromaufwärts des Wäschers, und die Spülflussrate (3) des Wäschers in Abhängigkeit vom Wert dieses Schwefeldioxidstoffstrom eingestellt wird, gemäß einer Funktion, deren Wert mit diesem Stoffstromwert zunimmt;
    - stromabwärts des Wäschers (201) ein Flüssigkeitsstoffstrom (4) entnommen wird, der sich vom Spülstoffstrom (3) unterscheidet, dieser Flüssigkeitsstoffstrom in einen Hydrozyklon oder eine Batterie von Hydrozyklonen (5) eingeleitet wird, mindestens eine Fraktion (6") des Überlaufs (6) dieses Hydrozyklons oder dieser Batterie von Hydrozyklonen mit Verdünnungswasser (7) vermischt wird, der pH-Wert dieser Mischung gemessen wird und die Menge an Neutralisierungsreagenz, welche in den Wäscher gegeben wird, in Abhängigkeit von dieser pH-Messung eingestellt wird;
    - der Gehalt der Rauchgase an organischen Verbindungen insgesamt oder an flüchtigen organischen Verbindungen stromaufwärts des Wäschers gemessen wird und die Einleitung eines Schaumverhüters (10) in diesen Wäscher ausgelöst wird, wenn diese Messung einen zuvor festgelegten Schwellenwert überschreitet;
    - mindestens beim Anfahren des Wäschers eine Gipsaufschlämmung oder Gips (11) eingeleitet wird, um eine Beimpfung mit Gipskeimen zu erzielen.

2. Verfahren nach dem vorhergehenden Anspruch, wobei die Spülflussrate des Wäschers in Abhängigkeit von eingangsseitigem Schwefeldioxidstoffstrom eingestellt wird, gemäß der Formel:

$$Q_1 = K^*Q_2,$$

wobei $Q_1$ die Spülfiussrate des Wäschers, K eine positive Konstante und $Q_2$ der Schwefeldioxidstoffstrom eingangsseitig des Wäschers ist.

3. Verfahren nach Anspruch 1 oder 2, wobei das Stoffstromverhältnis zwischen der Menge an Verdünnungswasser (7) und dem Anteil (6") des Überlaufs, welcher diesem Wasser beigemischt wird, im Bereich von 0,5 : 1 bis 20 : 1, vorzugsweise von 2 : 1 bis 10 : 1 liegt.

4. Verfahren nach einem der vorhergehenden Ansprüche, wobei ein pH-Schwellenwert gewählt wird, der im Bereich von 0,5 bis 7,5, vorzugsweise von 1,0 bis 3,5 liegt und insbesondere etwa 2 beträgt, und die Menge an Neutralisierungsreagenz, welche in den Wäscher eingeleitet wird, derart variiert wird, dass der gemessene pH-Wert der Mischung sich diesem Schwellenwert annähert.

5. Verfahren nach einem der vorhergehenden Ansprüche, wobei der zuvor festgelegte Schwellenwert, jenseits dessen die Einleitung eines Schaumverhüters ausgelöst wird, im Bereich von 50 bis 200 mg/Nm$^3$ an VOC (flüchtige organische Verbindungen) oder an TOC (Gesamtwert der organischen Verbindungen) liegt.

6. Verfahren nach dem vorhergehenden Anspruch, **dadurch gekennzeichnet, dass** der Schaumverhüter in einer Menge eingeleitet wird, die im Bereich von 10 bis 200 ml/m$^3$ an Wäscherspülung liegt.

7. Verfahren nach einem beliebigen der vorhergehenden Ansprüche,
**dadurch gekennzeichnet, dass** die Phase des Anfahrens des Wäschers den ersten 24 Stunden, vorzugsweise den ersten 12 Stunden der Verwendung des Wäschers entspricht.

8. Verfahren nach einem beliebigen der vorhergehenden Ansprüche, **dadurch gekennzeichnet, dass** der Gips oder die Gipsaufschlämmung derart eingeleitet werden, dass eine Konzentration von 2 bis 20 g/l an Gips in der Waschflüssigkeit erzielt wird.

9. Anlage zur Durchführung des Verfahrens nach einem beliebigen der vorhergehenden Ansprüche, umfassend:

- Mittel zum Bestimmen des Schwefeldioxidstoffstroms eingangsseitig des Wäschers;
- Mittel zum Einstellen der Flussrate einer Spülleitung des Wäscher, welche dazu geeignet sind, mit den Bestimmungsmitteln zusammenzuwirken;
- eine Leitung zur Entnahme von Flüssigkeit ausgangsseitig des Wäschers, wobei diese sich von der Spülleitung unterscheidet und den Hydrozyklon oder die Batterie von Hydrozyklonen (5) speist;
- Mittel zum Zusetzen von Verdünnungswasser im Bereich des Überlaufs (6) des Hydrozyklons oder der Batterie von Hydrozyklonen;
- Mittel zum Messen des pH-Werts, wobei diese im Bereich der Mittel zum Zusetzen von Verdünnungswasser angeordnet sind;
- Mittel zum Einstellen der Menge an neutralisierendem Reagenz, welche in den Wäscher eingeleitet wird, wobei diese dazu geeignet sind, mit den pH-Messmitteln zusammenzuwirken;
- Mittel zum Messen des Gehalts der Rauchgase, welche dem Wäscher zugeführt werden, an organischen Verbindungen insgesamt oder an flüchtigen organischen Verbindungen;
- Mittel zum Einleiten eines Schaumverhüters;
- Mittel zum Einstellen der Einleitungsmittel, wobei diese dazu geeignet sind, mit den Mitteln zum Messen organischer Verbindungen insgesamt oder flüchtiger organischer Verbindungen zusammenzuwirken; und
- Mittel zum Einleiten von Gips oder Gipsaufschlämmung in den Wäscher.

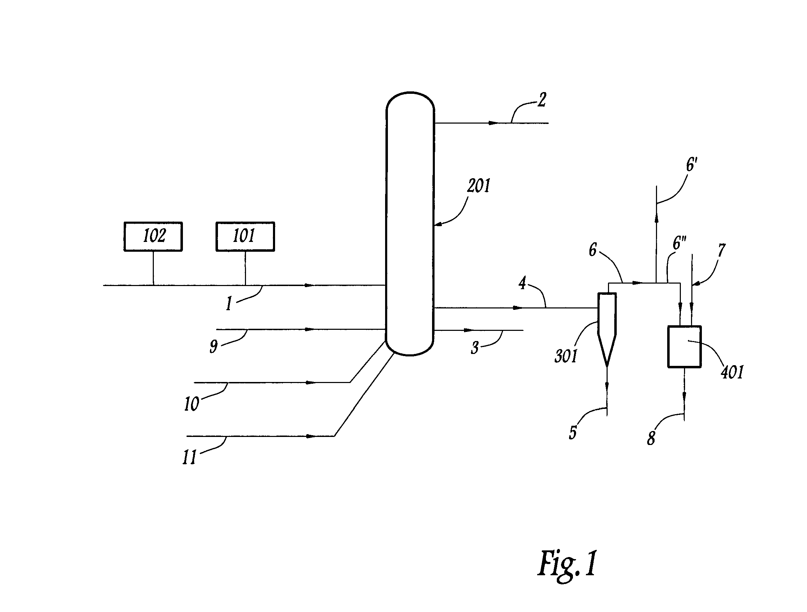

Fig.1

**EP 2 319 607 B1**

## RÉFÉRENCES CITÉES DANS LA DESCRIPTION

**Documents brevets cités dans la description**

- US 5635149 A

- WO 2006026060 A